# EUROPEAN PATENT APPLICATION

(11) **EP 4 716 084 A1**
(43) Date of publication of application: **25.03.2026**
(21) Application number: 24818217.2
(22) Date of filing: 09.01.2024
(51) Int. Cl.: H02M 1/42

(54) **POWER MODULE AND CHARGING DEVICE**

(30) Priority: 05.06.2023 CN 202310661298
(71) Applicant: Huawei Digital Power Technologies Co., Ltd., Shenzhen, Guangdong 518043 (CN)
(72) Inventor: YANG, Jin, Shenzhen, Guangdong 518043 (CN); LV, Zejie, Shenzhen, Guangdong 518043 (CN); LIU, Yaping, Shenzhen, Guangdong 518043 (CN); HE, Xinliang, Shenzhen, Guangdong 518043 (CN)
(74) Representative: Maiwald GmbH
(86) International application number: PCT/CN2024/071412
(87) International publication number: WO 2024/250678

(57) **Abstract**

This application provides a power module and a charging device. The power module includes N groups of interleaved parallel PFC circuits and a controller. Each group of the interleaved parallel PFC circuits includes a PFC inductor, an autotransformer, a first rectifier bridge arm, and a second rectifier bridge arm. The autotransformer includes a first winding and a second winding that are coupled to each other. One end of the PFC inductor is configured to receive an alternating current, and the other end of the PFC inductor is configured to connect to one end of the first winding and one end of the second winding. The other end of the first winding is configured to connect to the first rectifier bridge arm, and the other end of the second winding is configured to connect to the second rectifier bridge arm. The controller is configured to: in response to that an absolute value of a difference between a current of the first winding and a current of the second winding is greater than or equal to a preset value, adjust a duty cycle of a drive signal of a switching transistor of the first rectifier bridge arm or the second rectifier bridge arm in a next switching cycle.

## Description

### CROSS-REFERENCE TO RELATED APPLICATIONS

This application claims priority to Chinese Patent Application No. 202310661298.X, filed with the China National Intellectual Property Administration on June 5, 2023 and entitled "POWER MODULE AND CHARGING DEVICE", which is incorporated herein by reference in its entirety.

### TECHNICAL FIELD

This application relates to the field of new energy technologies, and in particular, to a power module and a charging device.

### BACKGROUND

A high-power alternating current-direct current (AC-DC) power module usually uses interleaved parallel power factor correction (PFC, Power Factor Correction) circuits to achieve high-power output. To achieve a good current equalization characteristic of a PFC circuit, an autotransformer is usually added to a circuit topology. However, due to a parameter difference between switching devices, a switch drive delay, different dead times, or the like, a volt-second product of the autotransformer may exceed an allowable value of a magnetic core, resulting in saturation of the magnetic core of the autotransformer. Consequently, the switching devices in circuits fail due to the saturation of the magnetic core of the autotransformer.

### SUMMARY

Embodiments of this application provide a power module and a charging device, to dynamically adjust an exciting current in an autotransformer, thereby resolving a problem of saturation of a magnetic core of the autotransformer, to protect a device in a circuit from failure caused by the saturation of the magnetic core of the autotransformer.

According to a first aspect, an embodiment of this application provides an AC-DC power module, where the AC-DC power module includes N groups of interleaved parallel PFC circuits and a controller. Each group of the interleaved parallel PFC circuits is configured to convert an alternating current of one phase of an alternating current power supply into a direct current and output the direct current to a direct current bus, where 1≤N≤3, and N is an integer. Each group of the interleaved parallel PFC circuits includes a PFC inductor, an autotransformer, a first rectifier bridge arm, and a second rectifier bridge arm. The autotransformer includes a first winding and a second winding that are coupled to each other. One end of the PFC inductor is configured to receive the alternating current, and the other end of the PFC inductor is configured to connect to one end of the first winding and one end of the second winding. The other end of the first winding is configured to connect to the first rectifier bridge arm, and the other end of the second winding is configured to connect to the second rectifier bridge arm.

The controller is configured to: in response to that an absolute value of a difference between a current of the first winding and a current of the second winding is greater than or equal to a preset value, adjust a duty cycle of a drive signal of a switching transistor of the first rectifier bridge arm or the second rectifier bridge arm in a next switching cycle. An operating frequency of the switching transistor is greater than a frequency of the alternating current.

The preset value is a current intensity when a magnetic core of the autotransformer reaches magnetic saturation, that is, a saturation current of the autotransformer.

When N=1, the AC-DC power module includes one group of interleaved parallel PFC circuits, and one end of the PFC inductor is configured to receive a single-phase alternating current.

When N=2, the AC-DC power module includes two groups of interleaved parallel PFC circuits, and one end of the PFC inductor of each group of interleaved parallel PFC circuits is configured to receive an alternating current of one phase in alternating currents of three phases. In addition, the PFC inductors of the two groups of interleaved parallel PFC circuits are configured to receive alternating currents of different phases.

When N=3, the AC-DC power module includes three groups of interleaved parallel PFC circuits, and one end of the PFC inductor of each group of interleaved parallel PFC circuits is configured to receive an alternating current of one phase in alternating currents of three phases. In addition, the PFC inductors of the three groups of interleaved parallel PFC circuits are configured to receive alternating currents of different phases.

Based on this disposing, a problem that a switching device in a circuit is damaged due to saturation of the magnetic core of the autotransformer can be resolved, and the controller starts to adjust the duty cycle of the drive signal of the switching transistor only when the difference between the currents of the two windings reaches the preset value, so that a control policy of the controller can be simplified.

In a possible implementation, the controller is configured to: in response to that the absolute value of the difference between the current of the first winding and the current of the second winding is greater than or equal to the preset value and that the absolute value of the current of the first winding is greater than the absolute value of the current of the second winding, reduce the duty cycle of the drive signal of the switching transistor of the first rectifier bridge arm in the next switching cycle.

Based on this disposing, an exciting current of the first winding can be reduced. In the next switching cycle, if the absolute value of the difference between the current of the first winding and the current of the second winding is still greater than or equal to the preset value and the absolute value of the current of the first winding is greater than the absolute value of the current of the second winding, the controller continues to reduce the duty cycle of the drive signal of the switching transistor of the first rectifier bridge arm in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the controller is configured to: in response to that the absolute value of the difference between the current of the first winding and the current of the second winding is greater than or equal to the preset value and that the absolute value of the current of the second winding is greater than the absolute value of the current of the first winding, reduce the duty cycle of the drive signal of the switching transistor of the second rectifier bridge arm in the next switching cycle.

Based on this disposing, an exciting current of the second winding can be reduced. In the next switching cycle, if the absolute value of the difference between the current of the first winding and the current of the second winding is still greater than or equal to the preset value and the absolute value of the current of the second winding is greater than the absolute value of the current of the first winding, the controller continues to reduce the duty cycle of the drive signal of the switching transistor of the second rectifier bridge arm in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, each group of interleaved parallel PFC circuits includes bus capacitors, and the bus capacitors include a positive bus capacitor and a negative bus capacitor that are connected in series. One end of the positive bus capacitor is connected to a positive direct current bus, and the other end of the negative bus capacitor is connected to a negative direct current bus.

The first rectifier bridge arm includes a first diode, a second diode, a third diode, a fourth diode, a first switching transistor, and a second switching transistor. The first diode, the second diode, the third diode, and the fourth diode are connected in series, a cathode of the first diode is connected to the positive direct current bus, and an anode of the fourth diode is connected to the negative direct current bus. One end of the first switching transistor is connected to a midpoint between the first diode and the second diode that are connected in series, and the other end of the first switching transistor is connected to a midpoint between the bus capacitors. One end of the second switching transistor is connected to a midpoint between the third diode and the fourth diode that are connected in series, and the other end of the second switching transistor is connected to the midpoint between the bus capacitors.

The second rectifier bridge arm includes a fifth diode, a sixth diode, a seventh diode, an eighth diode, a third switching transistor, and a fourth switching transistor. The fifth diode, the sixth diode, the seventh diode, and the eighth diode are connected in series, a cathode of the fifth diode is connected to the positive direct current bus, and an anode of the eighth diode is connected to the negative direct current bus. One end of the third switching transistor is connected to a midpoint between the fifth diode and the sixth diode that are connected in series, and the other end of the third switching transistor is connected to the midpoint between the bus capacitors. One end of the fourth switching transistor is connected to a midpoint between the seventh diode and the eighth diode that are connected in series, and the other end of the fourth switching transistor is connected to the midpoint between the bus capacitors.

In a possible implementation, the controller is configured to: in response to that a phase voltage of the alternating current is in a positive half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the first switching transistor in the next switching cycle.

Based on this disposing, the exciting current of the first winding can be reduced. In the next switching cycle, if the absolute value of the difference between the current of the first winding and the current of the second winding is still greater than or equal to the preset value and the absolute value of the current of the first winding is greater than the absolute value of the current of the second winding, the controller continues to reduce the duty cycle of the drive signal of the first switching transistor in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the controller is configured to: in response to that a phase voltage of the alternating current is in a positive half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the third switching transistor in the next switching cycle.

Based on this disposing, the exciting current of the second winding can be reduced. In the next switching cycle, if the absolute value of the difference between the current of the first winding and the current of the second winding is still greater than or equal to the preset value and the absolute value of the current of the first winding is less than the absolute value of the current of the second winding, the controller continues to reduce the duty cycle of the drive signal of the third switching transistor in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the controller is configured to: in response to that a phase voltage of the alternating current is in a negative half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the second switching transistor in the next switching cycle.

Based on this disposing, the exciting current of the first winding can be reduced. In the next switching cycle, if the absolute value of the difference between the current of the first winding and the current of the second winding is still greater than or equal to the preset value and the absolute value of the current of the first winding is greater than the absolute value of the current of the second winding, the controller continues to reduce the duty cycle of the drive signal of the second switching transistor in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the controller is configured to: in response to that a phase voltage of the alternating current is in a negative half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the fourth switching transistor in the next switching cycle.

Based on this disposing, the exciting current of the second winding can be reduced. In the next switching cycle, if the absolute value of the difference between the current of the first winding and the current of the second winding is still greater than or equal to the preset value and the absolute value of the current of the first winding is less than the absolute value of the current of the second winding, the controller continues to reduce the duty cycle of the drive signal of the fourth switching transistor in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the first rectifier bridge arm includes a first diode, a second diode, and a first two-way switching transistor. The first diode and the second diode are connected in series, a cathode of the first diode is connected to a positive direct current bus, and an anode of the second diode is connected to a negative direct current bus. One end of the first two-way switching transistor is connected to a midpoint between the first diode and the second diode that are connected in series, and the other end of the first two-way switching transistor is connected to a midpoint between the bus capacitors. The second rectifier bridge arm includes a third diode, a fourth diode, and a second two-way switching transistor. The third diode and the fourth diode are connected in series, a cathode of the third diode is connected to a positive direct current bus, and an anode of the fourth diode is connected to a negative direct current bus. One end of the second two-way switching transistor is connected to a midpoint between the third diode and the fourth diode that are connected in series, and the other end of the second two-way switching transistor is connected to the midpoint between the bus capacitors.

In a possible implementation, the controller is configured to: in response to that the absolute value of the difference between the current of the first winding and the current of the second winding is greater than or equal to the preset value and that the absolute value of the current of the first winding is greater than the absolute value of the current of the second winding, reduce a duty cycle of a drive signal of the first two-way switching transistor in the next switching cycle.

Based on this disposing, the exciting current of the first winding can be reduced. In the next switching cycle, if the absolute value of the difference between the current of the first winding and the current of the second winding is still greater than or equal to the preset value and the absolute value of the current of the first winding is greater than the absolute value of the current of the second winding, the controller continues to reduce the duty cycle of the drive signal of the first two-way switching transistor in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the controller is configured to: in response to that the absolute value of the difference between the current of the first winding and the current of the second winding is greater than or equal to the preset value and that the absolute value of the current of the first winding is less than the absolute value of the current of the second winding, reduce a duty cycle of a drive signal of the second two-way switching transistor in the next switching cycle.

Based on this disposing, the exciting current of the second winding can be reduced. In the next switching cycle, if the absolute value of the difference between the current of the first winding and the current of the second winding is still greater than or equal to the preset value and the absolute value of the current of the first winding is less than the absolute value of the current of the second winding, the controller continues to reduce the duty cycle of the drive signal of the second two-way switching transistor in the next switching cycle until the absolute value of the difference between the current of the first winding and the current of the second winding is less than the preset value. In this way, the magnetic core of the autotransformer can be unsaturated, so that the switching device in the circuit is not damaged due to saturation of the magnetic core of the autotransformer, and the operating reliability of the circuit is improved.

In a possible implementation, the first rectifier bridge arm includes a first switching transistor and a second switching transistor that are connected in series, one end of the first switching transistor is configured to connect to a positive direct current bus, and one end of the second switching transistor is configured to connect to a negative direct current bus. The second rectifier bridge arm includes a third switching transistor and a fourth switching transistor that are connected in series, one end of the third switching transistor is configured to connect to the positive direct current bus, and one end of the fourth switching transistor is configured to connect to the negative direct current bus. The other end of the first winding is configured to connect to a midpoint between the first switching transistor and the second switching transistor that are connected in series, and the other end of the second winding is configured to connect to a midpoint between the third switching transistor and the fourth switching transistor that are connected in series.

In a possible implementation, the controller is configured to: in response to that a phase voltage of the alternating current is in a positive half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the second switching transistor in the next switching cycle.

In a possible implementation, the controller is configured to: in response to that a phase voltage of the alternating current is in a positive half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the fourth switching transistor in the next switching cycle.

In a possible implementation, the controller is configured to: in response to that a phase voltage of the alternating current is in a negative half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the first switching transistor in the next switching cycle.

In a possible implementation, the controller is configured to: in response to that a phase voltage of the alternating current is in a negative half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the third switching transistor in the next switching cycle.

Based on this disposing, the controller may adjust the exciting currents of the first winding and the second winding of the autotransformer in real time. In this way, the magnetic core of the autotransformer can be unsaturated, so that the switching device in the circuit is not damaged due to saturation of the magnetic core of the autotransformer, and the operating reliability of the circuit is improved.

According to a second aspect, an embodiment of this application provides a charging device. The charging device includes at least one AC-DC power module provided in any one of the first aspect or the possible implementations of the first aspect, a power distribution unit, and at least one charging interface. An input end of the AC-DC power module is configured to receive an alternating current, an output end of the AC-DC power module is connected to an input end of the power distribution unit, an output end of the power distribution unit is connected to an input end of the charging interface, and the output end of the charging interface is configured to output a direct current.

According to a third aspect, an embodiment of this application provides a charging device. The charging device includes at least one AC-DC power module provided in any one of the first aspect or the possible implementations of the first aspect, at least one DC-DC power module, a power distribution unit, and at least one charging interface. An input end of the AC-DC power module is configured to receive an alternating current, an output end of the AC-DC power module is connected to a direct current bus of the charging device, an input end of the DC-DC power module is connected to the direct current bus of the charging device, an output end of the DC-DC power module is connected to an input end of the power distribution unit, an output end of the power distribution unit is connected to an input end of the charging interface, and the output end of the charging interface is configured to output a direct current.

### BRIEF DESCRIPTION OF DRAWINGS

FIG. 1 is a schematic of a charging pile according to an embodiment of this application;
FIG. 2 is a schematic of a circuit connection of an AC-DC power module according to an embodiment of this application;
FIG. 3 is a schematic of a connection of an interleaved parallel PFC circuit in FIG. 2;
FIG. 4 is a table of operating states of the circuit shown in FIG. 3 in one switching cycle;
FIG. 5 is a schematic of an equivalent circuit of the circuit shown in FIG. 3 in one operating state;
FIG. 6 is a schematic of an equivalent circuit of the circuit shown in FIG. 3 in another operating state;
FIG. 7 is a schematic of an equivalent circuit of the circuit shown in FIG. 3 in still another operating state;
FIG. 8 is a schematic of an equivalent circuit of the circuit shown in FIG. 3 in yet another operating state;
FIG. 9 is a schematic of another connection of the interleaved parallel PFC circuit in FIG. 2;
FIG. 10 is a schematic of still another connection of the interleaved parallel PFC circuit in FIG. 2;
FIG. 11 is a schematic of yet another connection of the interleaved parallel PFC circuit in FIG. 2;
FIG. 12 is a schematic of a charging device according to an embodiment of this application; and
FIG. 13 is a schematic of another charging device according to an embodiment of this application.

### DESCRIPTION OF EMBODIMENTS

For ease of understanding, terms in embodiments of this application are first explained.

Connection: It should be understood in a broad sense. For example, if A is connected to B, A may be directly connected to B, or A and B can be indirectly connected through an intermediate medium.

The terms "first", "second", and the like in the description are merely intended for a purpose of description, and shall not be understood as an indication or implication of relative importance or implicit indication of a quantity of indicated technical features. Therefore, features defined with "first", "second", and the like may explicitly or implicitly include one or more such features.

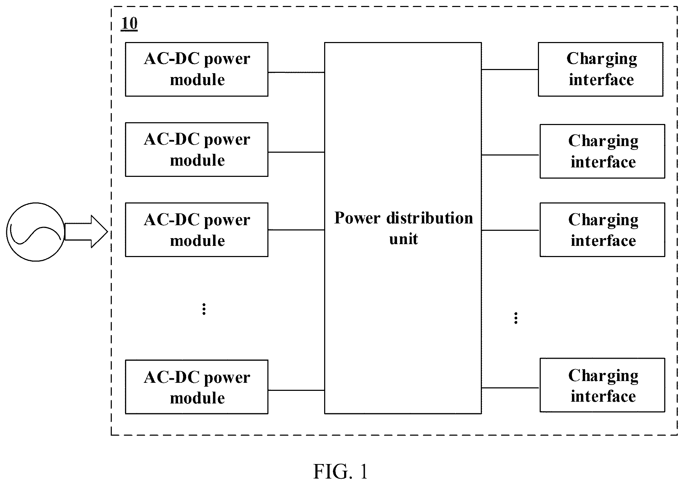

With development of new energy technologies, a quantity of electric vehicles is increasing, and a slow charging speed of the electric vehicles has always been one of pain points of users. To resolve this problem, charging duration of an electric vehicle is usually reduced by increasing an output power of a charging pile. FIG. 1 is a schematic of a charging pile according to an embodiment of this application. The charging pile 10 includes a plurality of AC-DC power modules, a power distribution unit, and charging interfaces. The AC-DC power module is configured to convert an alternating current into a direct current. The power distribution unit is configured to enable one power module in the plurality of AC-DC power modules to connect to one of the charging interfaces, or enable at least two power modules in the plurality of AC-DC power modules to connect to one of the charging interfaces after the at least two power modules are connected in parallel or in series. The charging interface is configured to connect to an electric vehicle to charge the electric vehicle.

To increase a charging power of the electric vehicle, the AC-DC power module inside the charging pile 10 implements high power output by using interleaved parallel PFC circuits.

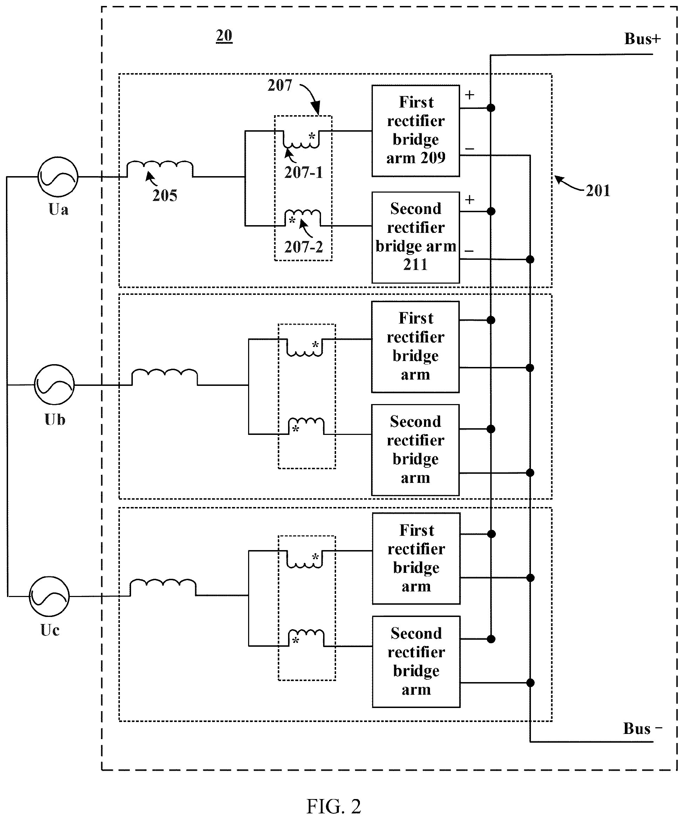

FIG. 2 is a schematic of a circuit connection of an AC-DC power module according to an embodiment of this application. The AC-DC power module 20 includes N groups of interleaved parallel PFC circuits 201, where 1≤N≤3, and N is an integer. Each group of the interleaved parallel PFC circuits 201 includes a PFC inductor 205, an autotransformer 207, a first rectifier bridge arm 209, and a second rectifier bridge arm 211. The autotransformer 207 includes a first winding 207-1 and a second winding 207-2. One end of the PFC inductor 205 is configured to receive an alternating current, and the other end of the PFC inductor is configured to connect to one end of the first winding 207-1 and one end of the second winding 207-2. The other end of the first winding 207-1 is connected to the first rectifier bridge arm 209, and the other end of the second winding 207-2 is connected to the second rectifier bridge arm 211.

A number of turns of the first winding 207-1 is equal to a number of turns of the second winding 207-2, and the windings are wound on a same magnetic core. A circuit topology structure of the first rectifier bridge arm 209 is the same as a circuit topology structure of the second rectifier bridge arm 211, and a drive signal of the first rectifier bridge arm 209 and a drive signal of the second rectifier bridge arm 211 are phase shifted by a specific angle. Based on this disposing, output voltage ripples of the two rectifier bridge arms connected to an alternating current of a same phase may mutually cancel each other out, to reduce impact of the voltage ripples on the circuits.

Due to a parameter difference between a switching device in the first rectifier bridge arm 209 and a switching device in the second rectifier bridge arm 211, a switch drive delay, different dead times, or the like, a volt-second product of the autotransformer 207 exceeds an allowable value of the magnetic core, resulting in saturation of the magnetic core of the autotransformer 207. Consequently, the switching devices in the circuits fail due to the saturation of the magnetic core of the autotransformer.

In view of this, an embodiment of this application provides an AC-DC power module. The power module includes the N groups of interleaved parallel PFC circuits and the controller shown in FIG. 2. The controller may determine, based on a difference between a current flowing through the first winding of the autotransformer and a current flowing through the second winding of the autotransformer, whether the magnetic core of the autotransformer tends to be saturated. If the magnetic core of the autotransformer tends to be saturated, the controller adjusts on durations of switching transistors in the two rectifier bridge arms to reduce an exciting current in the autotransformer, thereby resolving a problem of saturation of the magnetic core of the autotransformer, to protect the devices in the circuits from failure caused by the saturation of the magnetic core of the autotransformer.

The foregoing FIG. 2 illustrates a circuit connection manner by using an example in which the AC-DC power module includes three groups of interleaved parallel PFC circuits. The three groups of interleaved parallel PFC circuits are connected to a three-phase alternating current power supply, to achieve high current output. In actual application, a quantity of interleaved parallel PFC circuits may be set according to a power requirement of a load. If the load requires a small power, an input end of the AC-DC power module 20 only needs to be connected to a single-phase alternating current power supply, that is, the AC-DC power module 20 only needs to include one group of interleaved parallel PFC circuits. If the load requires a large power, the input end of the AC-DC power module 20 is connected to a three-phase alternating current power supply, that is, the AC-DC power module 20 includes three groups of interleaved parallel PFC circuits, where each group of interleaved parallel PFC circuits is connected to an alternating current power supply of one phase in the three-phase alternating current power supply, and different groups of interleaved parallel PFC circuits are connected to alternating current power supplies of different phases. A quantity of interleaved parallel PFC circuits is not limited in this application, and may be set according to an actual load requirement.

The following describes in detail an operating principle of the AC-DC power module provided in this embodiment of this application by using a specific circuit as an example.

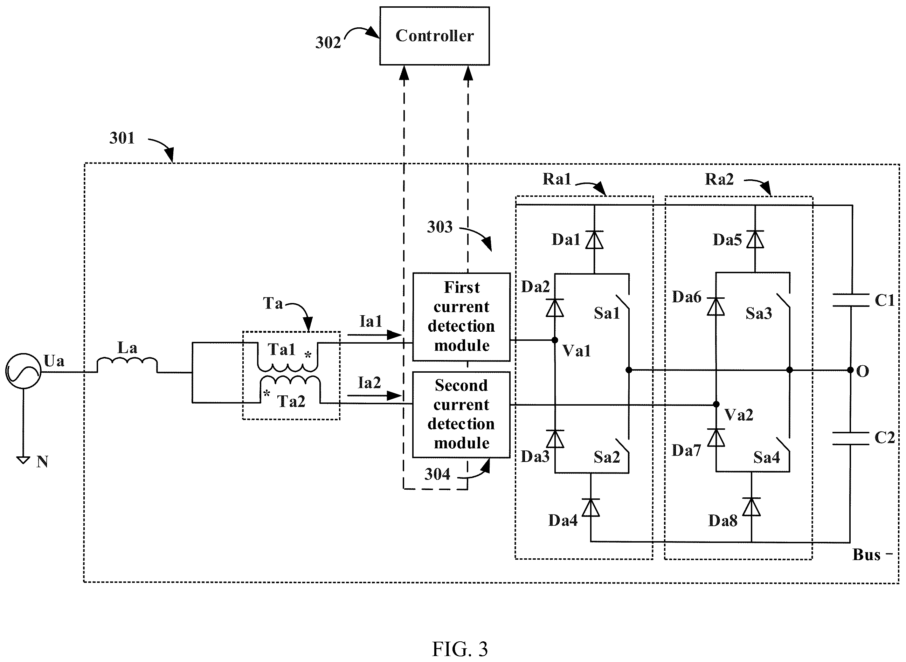

FIG. 3 is a schematic of a connection of the interleaved parallel PFC circuits in FIG. 2. An interleaved parallel PFC circuit 301 includes a PFC inductor La, an autotransformer Ta, a first rectifier bridge arm Ra1, a second rectifier bridge arm Ra2, and bus capacitors. The bus capacitors include a positive bus capacitor C1 and a negative bus capacitor C2 that are connected in series. One end of the positive bus capacitor C1 is connected to a positive direct current bus Bus+, and one end of the negative bus capacitor is connected to a negative direct current bus Bus-.

The first rectifier bridge arm Ra1 includes a first diode Da1, a second diode Da2, a third diode Da3, a fourth diode Da4, a first switching transistor Sa1, and a second switching transistor Sa2. The first diode Da1, the second diode Da2, the third diode Da3, and the fourth diode Da4 are connected in series, a cathode of the first diode Da1 is connected to the positive direct current bus, and an anode of the fourth diode Da4 is connected to the negative direct current bus. One end of the first switching transistor Sa1 is connected to a midpoint between the first diode Da1 and the second diode Da2 that are connected in series, and the other end of the first switching transistor Sa1 is connected to a midpoint O between the bus capacitors C1 and C2. One end of the second switching transistor Sa2 is connected to a midpoint between the third diode Da3 and the fourth diode Da4 that are connected in series, and the other end of the second switching transistor Sa2 is connected to the midpoint O between the bus capacitors C1 and C2.

Similarly, the second rectifier bridge arm Ra2 includes a fifth diode Da5, a sixth diode Da6, a seventh diode Da7, an eighth diode Da8, a third switching transistor Sa3, and a fourth switching transistor Sa4. The fifth diode Da5, the sixth diode Da6, the seventh diode Da7, and the eighth diode Da8 are connected in series, a cathode of the fifth diode Da5 is connected to the positive direct current bus, and an anode of the eighth diode Da8 is connected to the negative direct current bus. One end of the third switching transistor Sa3 is connected to a midpoint between the fifth diode Da5 and the sixth diode Da6 that are connected in series, and the other end of the third switching transistor Sa3 is connected to the midpoint O between the bus capacitors C1 and C2. One end of the fourth switching transistor Sa4 is connected to a midpoint between the seventh diode Da7 and the eighth diode Da8 that are connected in series, and the other end of the fourth switching transistor Sa4 is connected to the midpoint O between the bus capacitors C1 and C2.

It should be noted that the midpoint O between the bus capacitors C1 and C2 is any point between two connected bus capacitors. The midpoint between two diodes that are connected in series is any point between the two diodes that are connected.

The autotransformer includes a first winding Ta1 and a second winding Ta2, and a number of turns of the first winding Ta1 is equal to a number of turns of the second winding Ta2. One end of the PFC inductor La is configured to receive an alternating current, and the other end of the PFC inductor La is connected to one end of the first winding Ta1 and one end of the second winding Ta2. The other end of the first winding Ta1 is connected to a midpoint between the second diode Da2 and the third diode Da3 that are connected in series, and the other end of the second winding Ta2 is connected to a midpoint between the sixth diode Da6 and the seventh diode Da7 that are connected in series.

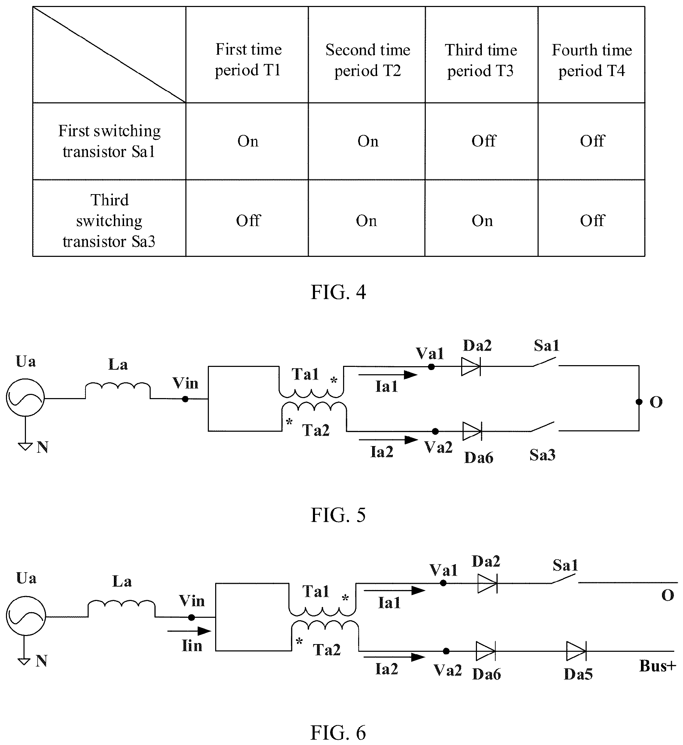

FIG. 4 is a table of operating states of the interleaved parallel PFC circuit 301 in one switching cycle T when a phase voltage of an alternating current output by an alternating current power supply Ua is in a positive half cycle. The switching cycle T is a cycle of a drive signal of a switching transistor in the circuit. The interleaved parallel PFC circuit 301 has four operating states: In a first time period T1, Sa1 is turned on, and Sa2 is turned off; in a second time period T2, Sa1 is turned on, and Sa2 is turned on; in a third time period T3, Sa1 is turned off, and Sa2 is turned on; and in a fourth time period T4, Sa1 is turned off, and Sa2 is turned off.

Equivalent circuit diagrams of the interleaved parallel PFC circuit 301 in different switch combinations are shown in FIG. 5 to FIG. 8. In the following analysis of the circuit, when the phase voltage of the alternating current output by the alternating current power supply Ua is in the positive half cycle, a flow direction of the current in the interleaved parallel PFC circuit is a positive direction. To be specific, when the phase voltage of the alternating current power supply Ua is in the positive half cycle, a current Ia1 that is detected by a current sensor 303 and that flows through the first winding Ta1 is greater than or equal to 0, and a current Ia2 that is detected by a current sensor 304 and that flows through the second winding Ta2 is greater than or equal to 0; and when the phase voltage of the alternating current output by the alternating current power supply Ua is in a negative half cycle, the Ia1 detected by the current sensor 303 is less than or equal to 0, and the Ia2 detected by the current sensor 304 is less than or equal to 0.

FIG. 5 is a schematic of an equivalent circuit when the first switching transistor Sa1 and the third switching transistor Sa3 are simultaneously turned on. When the first switching transistor Sa1 and the third switching transistor Sa3 are simultaneously turned on, a level at a midpoint of the first rectifier bridge arm is Va1=0, a voltage at a midpoint of the second rectifier bridge arm is Va2=0 V, and a voltage at a bridge arm port is Vin=0.5*(Va1+Va2)=0 V.

FIG. 6 is a schematic of an equivalent circuit when the first switching transistor Sa1 is turned on and the third switching transistor Sa3 is turned off. In this case, the voltage at the midpoint of the first rectifier bridge arm is Val=0 V, the voltage at the midpoint of the second rectifier bridge arm is Va2=V_{Bus}, and the voltage at the bridge arm port is Vin=0.5*(Va1+Va2)=0.5*V_{Bus}. A voltage at two ends of the first winding Ta1 is V_{Ta1}=Vin-Va1=0.5*V_{bus}, and a voltage at two ends of the second winding Ta2 is V_{Ta2}=Vin-Va2=- 0.5*V_{bus}.

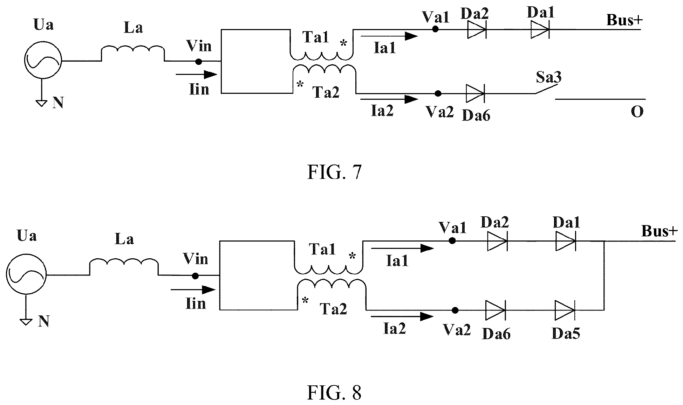

FIG. 7 is a schematic of an equivalent circuit when the first switching transistor Sa1 is turned off and the third switching transistor Sa3 is turned on. In this case, the voltage at the midpoint of the first rectifier bridge arm is Va1=V_{Bus}, the voltage at the midpoint of the second rectifier bridge arm is Va2=0 V, and the voltage at the bridge arm port is Vin=0.5*(Va1+Va2)=0.5*V_{Bus}. The voltage at the two ends of the second winding Ta2 is V_{Ta2}=Vin-Va2=0.5*V_{bus}, and the voltage at the two ends of the first winding Ta1 is V_{Ta1}=Vin-Va1=-0.5*V_{bus}.

FIG. 8 is a schematic of an equivalent circuit when both the first switching transistor Sa1 and the third switching transistor Sa3 are turned off. In this case, the voltage at the midpoint of the first rectifier bridge arm is Va1=V_{Bus}, the voltage at the midpoint of the second rectifier bridge arm is Va2=V_{Bus}, and the voltage at the bridge arm port is Vin=0.5*(Va1+Va2)=V_{Bus}. The voltage at the two ends of the first winding Ta1 is V_{Ta1}=Vin-Va1=0 V, and the voltage at the two ends of the first winding Ta1 is V_{Ta1}=Vin-Va1=0 V.

It can be learned from the foregoing analysis that, when the phase voltage of the alternating current output by the alternating current power supply Ua is in the positive half cycle and when the first switching transistor Sa1 and the third switching transistor Sa3 are not simultaneously turned on, a voltage difference occurs between the two ends of the first winding Ta1 and the second winding Ta2. The first winding Ta1 is used as an example. When the first switching transistor Sa1 is turned on and the third switching transistor Sa3 is turned off, V_{Ta1}=Vin-Va1=0.5*V_{bus}, and when the first switching transistor Sa1 is turned off and the third switching transistor Sa3 is turned on, V_{Ta1}=Vin-Va1=-0.5*V_{bus}.

According to the volt-second balance principle, in one switching cycle T, when the circuit operates in a steady state, a volt-second product of the autotransformer Ta is balanced, that is, 0.5*V_{bus}*T1-0.5*V_{bus}*T3=0. If a volt-second product of Ta1 is unbalanced in one switching cycle T, an exciting current in Ta1 is accumulated continuously, and finally the magnetic core of the autotransformer Ta is saturated. It can be learned from a voltage formula U=L*di/dt of an inductor that U*dt=L*di. Therefore, in one switching cycle, the volt-second product of Ta1 may be equivalently adjusted by adjusting a magnitude of the exciting current, thereby implementing a balance of the volt-second product of Ta1.

Similarly, if a voltage integral at the two ends of Ta2 is not 0 in one switching cycle T, an exciting current in Ta2 continuously increases, and finally the magnetic core of the autotransformer Ta is saturated.

Therefore, when the phase voltage of the alternating current output by the alternating current power supply Ua is in the positive half cycle, a magnitude of an exciting current of the autotransformer Ta can be adjusted by adjusting duty cycles of drive signals of the first switching transistor Sa1 and the third switching transistor Sa3, to enable the autotransformer not to operate in a saturated state.

When Ia1>0, Ia2>0, and Ia1-Ia2>0, it indicates that an accumulated conduction time of the first switching transistor Sa1 is greater than an accumulated conduction time of the third switching transistor Sa3; and when Ia1>0, Ia2>0, and Ial-Ia2<0, it indicates that the accumulated conduction time of the third switching transistor Sa3 is greater than the accumulated conduction time of the first switching transistor Sa1.

When the phase voltage of the alternating current output by the alternating current power supply Ua is in the negative half cycle, the second switching transistor Sa2 and the fourth switching transistor Sa4 are alternately turned on. An operating principle of the circuit is the same as that in the foregoing analysis, and details are not described herein again. Similarly, the magnitude of the exciting current of the autotransformer Ta can be adjusted by adjusting duty cycles of drive signals of the second switching transistor Sa2 and the fourth switching transistor Sa4, to enable the autotransformer not to operate in a saturated state.

When Ia1<0, Ia2<0, and Ia1-Ia2>0, it indicates that an accumulated conduction time of the fourth switching transistor Sa4 is greater than an accumulated conduction time of the second switching transistor Sa2; and when Ia1<0, Ia2<0, and Ia1-Ia2<0, it indicates that the accumulated conduction time of the second switching transistor Sa2 is greater than the accumulated conduction time of the fourth switching transistor Sa4.

It can be learned from the foregoing analysis that, based on a difference between the currents of the two windings, a difference between the conduction times of the switching transistors in the two rectifier bridge arms can be determined, so that the exciting current of the autotransformer Ta can be reduced by adjusting a duty cycle of a drive signal of a switching transistor in a next switching cycle, to resolve a problem of saturation of the magnetic core of the autotransformer Ta.

Refer to FIG. 3. A first current detection module 303 is configured to collect a current Ia1 of the first winding Ta1, and a second current detection module 304 is configured to collect a current Ia2 flowing through the second winding Ta2. A controller 302 is configured to obtain the currents Ia1 and Ia2, and determine, based on a difference between the currents of the two windings, whether a duty cycle of a switching transistor in a next switching cycle needs to be adjusted.

It should be noted that positions of the current detection modules shown in FIG. 3 are merely an example. The current detection modules may be located at any positions of two autotransformer branches, provided that the current Ia1 flowing through the first winding Ta1 and the current Ia2 flowing through the second winding Ta2 can be detected.

In a possible implementation, in response to that an absolute value of the difference between the currents of the two windings is less than a preset value Imax, the controller 302 does not adjust the duty cycle of the drive signal of the switching transistor in the next switching cycle; and in response to that the absolute value of the difference between the currents of the two windings is greater than or equal to the preset value Imax, the controller 302 adjusts the duty cycle of the drive signal of the switching transistor in the next switching cycle, to reduce the difference between the currents of the two windings.

The preset value is a current intensity when the magnetic core of the autotransformer Ta reaches magnetic saturation, that is, a saturation current of the autotransformer.

Based on this implementation, the problem of saturation of the magnetic core of the autotransformer Ta can be resolved, and the controller 302 starts to adjust the duty cycle of the drive signal of the switching transistor only when the difference between the currents of the two windings reaches the preset value, so that a control policy of the controller can be simplified.

In a possible implementation, in response to that Ia1>0, Ia2>0, and Ia1-Ia2≥Imax, the controller 302 is configured to reduce a duty cycle of a drive signal of the first switching transistor Sa1 in the next switching cycle.

That Ia1>0 and Ia2>0 indicates that the phase voltage of the alternating current is in the positive half cycle, that is, in response to that the phase voltage of the alternating current power supply Ua is in the positive half cycle, |Ia1-Ia2|≥Imax, and |Ia1|>|Ia2|, the controller 302 is configured to reduce the duty cycle of the drive signal of the first switching transistor Sa1 in the next switching cycle.

That |Ia1-Ia2|≥Imax represents the absolute value of the difference between Ia1 and Ia2, |Ia1| represents an absolute value of Ia1, and |Ia2| represents an absolute value of Ia2.

It can be understood that the exciting current of the first winding Ta1 can be reduced in this adjustment manner. If |Ia1-Ia2|≥Imax and |Ia1|>|Ia2| in the next switching cycle, the controller 302 continues to reduce the duty cycle of the drive signal of the first switching transistor Sa1 until |Ia1-Ia2|<Imax, so that the magnetic core of the autotransformer Ta is unsaturated, and then an electronic apparatus in the circuit is not damaged due to saturation of the magnetic core of the autotransformer Ta.

In a possible implementation, in response to that Ia1>0, Ia2>0, and Ia2-Ia1≥Imax, the controller 302 is configured to reduce a duty cycle of a drive signal of the third switching transistor Sa3 in the next switching cycle.

That is, in response to that the phase voltage of the alternating current is in the positive half cycle, |Ia1-Ia2|≥Imax, and |Ia2|>|Ia1|, the controller 302 is configured to reduce the duty cycle of the drive signal of the third switching transistor Sa3 in the next switching cycle.

It can be understood that the exciting current of the second winding Ta2 can be reduced in this adjustment manner. If |Ia1-Ia2|≥Imax and |Ia2|>|Ia1| in the next switching cycle, the controller 302 continues to reduce the duty cycle of the drive signal of the third switching transistor Sa3 until |Ia1-Ia2|<Imax, so that the magnetic core of the autotransformer Ta is unsaturated, and then the electronic apparatus in the circuit is not damaged due to saturation of the magnetic core of the autotransformer Ta.

In a possible implementation, in response to that Ia1<0, Ia2<0, and Ia1-Ia2≥Imax, the controller 302 is configured to reduce a duty cycle of a drive signal of the fourth switching transistor Sa4 in the next switching cycle.

That is, in response to that the phase voltage of the alternating current is in the negative half cycle, |Ia1-Ia2|≥Imax, and |Ia1|<Ia2|, the controller 302 is configured to reduce the duty cycle of the drive signal of the fourth switching transistor Sa4 in the next switching cycle.

It can be understood that the exciting current of the second winding Ta2 can be reduced in this adjustment manner. If |Ia1-Ia2|≥Imax and |Ia2|>|Ia1| in the next switching cycle, the controller 302 continues to reduce the duty cycle of the drive signal of the fourth switching transistor Sa4 until |Ia1-Ia2|<Imax, so that the magnetic core of the autotransformer Ta is unsaturated, and then the electronic apparatus in the circuit is not damaged due to saturation of the magnetic core of the autotransformer Ta.

In a possible implementation, in response to that Ia1<0, Ia2<0, and Ia2-Ia1≥Imax, the controller 302 is configured to reduce a duty cycle of a drive signal of the second switching transistor Sa2 in the next switching cycle.

That is, in response to that the phase voltage of the alternating current is in the negative half cycle, |Ia1-Ia2|≥Imax, and |Ia2|<Ia1|, the controller 302 is configured to reduce the duty cycle of the drive signal of the second switching transistor Sa2 in the next switching cycle.

It can be understood that the exciting current of the first winding Ta1 can be reduced in this adjustment manner. If |Ia1-Ia2|≥Imax and |Ia1|>|Ia2| in the next switching cycle, the controller 302 continues to reduce the duty cycle of the drive signal of the second switching transistor Sa2 until |Ia1-Ia2|<Imax, so that the magnetic core of the autotransformer Ta is unsaturated, and then the electronic apparatus in the circuit is not damaged due to saturation of the magnetic core of the autotransformer Ta.

It should be noted that operating frequencies of the first switching transistor Sa1, the second switching transistor Sa2, the third switching transistor Sa3, and the fourth switching transistor Sa4 are greater than an operating frequency of the alternating current.

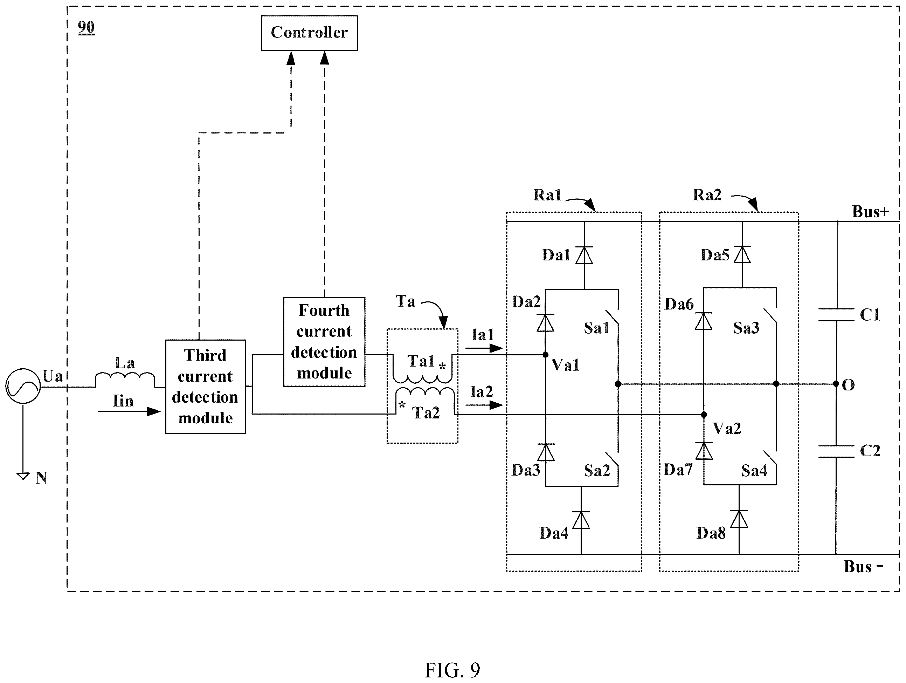

In a possible implementation, FIG. 9 is a schematic of another connection of the interleaved parallel PFC circuit according to an embodiment of this application. An operating principle of the circuit shown in FIG. 9 is the same as the foregoing analysis, and details are not described herein again. Different from FIG. 3, a third current detection module is configured to detect a total current Iin flowing into the interleaved parallel PFC circuit, and a fourth current detection module is configured to detect the current Ia1 flowing through the first winding Ta1. In this case, the current flowing through the second winding Ta2 is Ia2=Iin-Ia1. Alternatively, the third current detection module is configured to detect the total current Iin flowing into the interleaved parallel PFC circuit, and the fourth current detection module is configured to detect the current Ia2 flowing through the second winding Ta2. In this case, the current flowing through the first winding Ta1 is Ia1=Iin-Ia2.

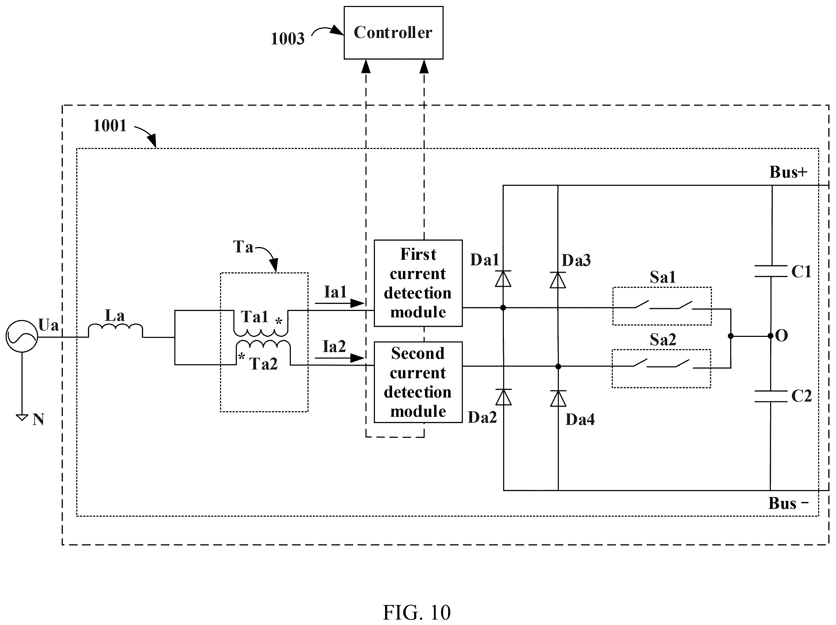

FIG. 10 is a schematic of still another connection of the interleaved parallel PFC circuit according to an embodiment of this application. The interleaved parallel PFC circuit 1001 includes a PFC inductor La, an autotransformer Ta, a first rectifier bridge arm, a second rectifier bridge arm, and bus capacitors. The bus capacitors include a positive bus capacitor C1 and a negative bus capacitor C2 that are connected in series, one end of the positive bus capacitor C1 is connected to a positive direct current bus Bus+, the other end of the positive bus capacitor C1 is connected to a midpoint O between the bus capacitors, one end of the negative bus capacitor C2 is connected to the midpoint O between the bus capacitors, and the other end of the negative bus capacitor is connected to a negative direct current bus Bus-.

The first rectifier bridge arm includes a first diode Da1, a second diode Da2, and a first two-way switching transistor Sa1. The first diode Da1 and the second diode Da2 are connected in series, a cathode of the first diode Da1 is connected to the positive direct current bus, and an anode of the second diode Da2 is connected to the negative direct current bus. One end of the first two-way switching transistor Sa1 is connected to a midpoint between the first diode Da1 and the second diode Da2 that are connected in series, and the other end of the first two-way switching transistor Sa1 is connected to a midpoint O between the bus capacitors C1 and C2.

Similarly, the second rectifier bridge arm includes a third diode Da3, a fourth diode Da4, and a second two-way switching transistor Sa2. The third diode Da3 and the fourth diode Da4 are connected in series, a cathode of the third diode Da3 is connected to the positive direct current bus, and an anode of the fourth diode Da4 is connected to the negative direct current bus. One end of the second two-way switching transistor Sa2 is connected to a midpoint between the third diode Da3 and the fourth diode Da4 that are connected in series, and the other end of the second two-way switching transistor Sa2 is connected to the midpoint O between the bus capacitors C1 and C2.

The autotransformer includes a first winding Ta1 and a second winding Ta2, and a number of turns of the first winding Ta1 is equal to a number of turns of the second winding Ta2. One end of the PFC inductor La is configured to receive an alternating current, and the other end of the PFC inductor La is connected to one end of the first winding Ta1 and one end of the second winding Ta2. The other end of the first winding Ta1 is connected to the midpoint between the first diode Dal and the second diode Da2 that are connected in series, and the other end of the second winding Ta2 is connected to the midpoint between the third diode Da3 and the fourth diode Da4 that are connected in series.

The first two-way switching transistor Sa1 includes two switching transistors, and driving time sequences of the two switching transistors are the same. The second two-way switching transistor Sa2 includes two switching transistors, and driving time sequences of the two switching transistors are the same.

An operating principle of this circuit is the same as that of the interleaved parallel PFC circuit described above. When the first two-way switching transistor Sa1 and the second two-way switching transistor Sa2 are not simultaneously turned on, the autotransformer Ta generates an exciting current.

In a possible implementation, in response to that Ia1>0, Ia2>0, and Ia1-Ia2≥Imax, a controller 1003 is configured to reduce a duty cycle of a drive signal of the first two-way switching transistor Sa1 in a next switching cycle.

That is, in response to that a phase voltage of the alternating current is in a positive half cycle, |Ia1-Ia2|≥Imax, and |Ia1|>|Ia2|, the controller 1003 is configured to reduce the duty cycle of the drive signal of the first two-way switching transistor Sa1 in the next switching cycle.

In a possible implementation, in response to that Ia1<0, Ia2<0, and Ia2-Ia1≥Imax, the controller 1003 is configured to reduce the duty cycle of the drive signal of the first two-way switching transistor Sa1 in the next switching cycle.

That is, in response to that the phase voltage of the alternating current is in a negative half cycle, |Ia2-Ia1|≥Imax, and |Ia2|<Ia1|, the controller 1003 is configured to reduce the duty cycle of the drive signal of the first two-way switching transistor Sal in the next switching cycle.

In conclusion, in response to that |Ia1-Ia2|≥Imax and |Ia1|>|Ia2|, the controller 1003 is configured to reduce the duty cycle of the drive signal of the first two-way switching transistor Sa1 in the next switching cycle.

It can be understood that the exciting current of the first winding Ta1 can be reduced in this adjustment manner. If |Ia1-Ia2|≥Imax and |Ia1|>|Ia2| in the next switching cycle, the controller 1003 continues to reduce the duty cycle of the drive signal of the first two-way switching transistor Sa1 until |Ia1-Ia2|<Imax, so that a magnetic core of the autotransformer Ta is unsaturated, and then an electronic apparatus in the circuit is not damaged due to saturation of the magnetic core of the autotransformer Ta.

In a possible implementation, in response to that Ia1>0, Ia2>0, and Ia2-Ia1≥Imax, the controller 1003 is configured to reduce a duty cycle of a drive signal of the second two-way switching transistor Sa2 in the next switching cycle.

That is, in response to that the phase voltage of the alternating current is in a positive half cycle, |Ia2-Ia1|≥Imax, and |Ia2|>|Ia1|, the controller 1003 is configured to reduce the duty cycle of the drive signal of the second two-way switching transistor Sa2 in the next switching cycle.

In a possible implementation, in response to that Ia1<0, Ia2<0, and Ia1-Ia2≥Imax, the controller 1003 is configured to reduce the duty cycle of the drive signal of the second two-way switching transistor Sa2 in the next switching cycle.

In response to that the phase voltage of the alternating current is in the negative half cycle, |Ia1-Ia2|≥Imax, and |Ia1|<Ia2|, the controller 302 is configured to reduce the duty cycle of the drive signal of the second two-way switching transistor Sa2 in the next switching cycle.

In conclusion, in response to that |Ia1-Ia2|≥Imax and |Ia1|<Ia2|, the controller 302 is configured to reduce the duty cycle of the drive signal of the second two-way switching transistor Sa2 in the next switching cycle.

It can be understood that the exciting current of the second winding Ta2 can be reduced in this adjustment manner. If |Ia1-Ia2|≥Imax and |Ia1|<Ia2| in the next switching cycle, the controller 1003 continues to reduce the duty cycle of the drive signal of the second two-way switching transistor Sa2 until |Ia1-Ia2|<Imax, so that the magnetic core of the autotransformer Ta is unsaturated, and then the electronic apparatus in the circuit is not damaged due to saturation of the magnetic core of the autotransformer Ta.

It should be noted that operating frequencies of the first two-way switching transistor Sa1 and the second two-way switching transistor Sa2 are greater than an operating frequency of an alternating current power supply.

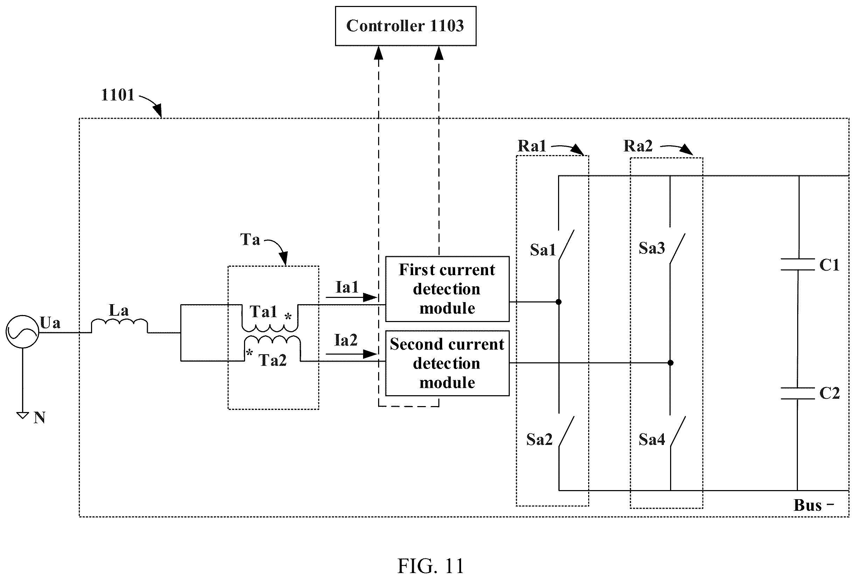

FIG. 11 is a schematic of still another interleaved parallel PFC circuit according to an embodiment of this application. The interleaved parallel PFC circuit 1101 includes a PFC inductor La, an autotransformer Ta, a first rectifier bridge arm Ra1, a second rectifier bridge arm Ra1, and bus capacitor. The bus capacitors include a positive bus capacitor C1 and a negative bus capacitor C2 that are connected in series. One end of the positive bus capacitor C1 is connected to a positive direct current bus Bus+, and one end of the negative bus capacitor is connected to a negative direct current bus Bus-.

The first rectifier bridge arm Ra1 includes a first switching transistor Sa1 and a second switching transistor Sa2 that are connected in series. One end of the first switching transistor Sal is configured to connect to the positive direct current bus, and one end of the second switching transistor Sa2 is configured to connect to the negative direct current bus.

The second rectifier bridge arm Ra2 includes a third switching transistor Sa3 and a fourth switching transistor Sa4 that are connected in series. One end of the third switching transistor Sa3 is configured to connect to the positive direct current bus, and one end of the fourth switching transistor Sa4 is configured to connect to the negative direct current bus.

The autotransformer includes a first winding Ta1 and a second winding Ta2, and a number of turns of the first winding Ta1 is equal to a number of turns of the second winding Ta2. One end of the PFC inductor La is configured to receive an alternating current, and the other end of the PFC inductor La is connected to one end of the first winding Ta1 and one end of the second winding Ta2. The other end of the first winding Ta1 is connected to a midpoint between the first switching transistor Sa1 and the second switching transistor Sa2 that are connected in series, and the other end of the second winding Ta2 is connected to a midpoint between the third switching transistor Sa3 and the fourth switching transistor Sa4 that are connected in series.

Operating frequencies of the switching transistors Sa1, Sa2, Sa3, and Sa4 are greater than a frequency of an alternating current Ua.

An operating principle of this circuit is the same as that of the interleaved parallel PFC circuit described above. When the first switching transistor Sa1 and the third switching transistor Sa3 are not simultaneously turned on, the autotransformer Ta generates an exciting current. Alternatively, when the second switching transistor Sa2 and the fourth switching transistor Sa4 are not simultaneously turned on, the autotransformer Ta generates an exciting current.

In a possible implementation, in response to that a phase voltage of the alternating current power supply Ua is in a positive half cycle, |Ia1-Ia2|≥Imax, and |Ia1|>|Ia2|, a controller 1103 is configured to reduce a duty cycle of a drive signal of the second switching transistor Sa2 in a next switching cycle.

It can be understood that the exciting current of the first winding Ta1 can be reduced in this adjustment manner. If |Ia1-Ia2|≥Imax and |Ia1|>|Ia2| in the next switching cycle, the controller 1103 continues to reduce the duty cycle of the drive signal of the second switching transistor Sa2 until |Ia1-Ia2|<Imax, so that a magnetic core of the autotransformer Ta is unsaturated, and then an electronic apparatus in the circuit is not damaged due to saturation of the magnetic core of the autotransformer Ta.

In a possible implementation, in response to that the phase voltage of the alternating current is in the positive half cycle, |Ia1-Ia2|≥Imax, and |Ia2|>|Ia1|, the controller 1103 is configured to reduce a duty cycle of a drive signal of the fourth switching transistor Sa4 in the next switching cycle.

It can be understood that the exciting current of the second winding Ta2 can be reduced in this adjustment manner. If |Ia1-Ia2|≥Imax and |Ia2|>|Ia1| in the next switching cycle, the controller 1103 continues to reduce the duty cycle of the drive signal of the fourth switching transistor Sa4 until |Ia1-Ia2|<Imax, so that the magnetic core of the autotransformer Ta is unsaturated, and then the electronic apparatus in the circuit is not damaged due to saturation of the magnetic core of the autotransformer Ta.

In a possible implementation, in response to that the phase voltage of the alternating current is in a negative half cycle, |Ia1-Ia2|≥Imax, and |Ia1|<|Ia2|, the controller 1103 is configured to reduce a duty cycle of a drive signal of the third switching transistor Sa3 in the next switching cycle.

It can be understood that the exciting current of the second winding Ta2 can be reduced in this adjustment manner. If |Ia1-Ia2|≥Imax and |Ia2|>|Ia1| in the next switching cycle, the controller 1103 continues to reduce the duty cycle of the drive signal of the third switching transistor Sa3 until |Ia1-Ia2|<Imax, so that the magnetic core of the autotransformer Ta is unsaturated, and then the electronic apparatus in the circuit is not damaged due to saturation of the magnetic core of the autotransformer Ta.

In a possible implementation, in response to that the phase voltage of the alternating current is in the negative half cycle, |Ia1-Ia2|≥Imax, and |Ia2|<|Ia1|, the controller 1103 is configured to reduce a duty cycle of a drive signal of the first switching transistor Sa1 in the next switching cycle.

It can be understood that the exciting current of the first winding Ta1 can be reduced in this adjustment manner. If |Ia1-Ia2|≥Imax and |Ia1|>|Ia2| in the next switching cycle, the controller 1103 continues to reduce the duty cycle of the drive signal of the first switching transistor Sa1 until |Ia1-Ia2|<Imax, so that the magnetic core of the autotransformer Ta is unsaturated, and then the electronic apparatus in the circuit is not damaged due to saturation of the magnetic core of the autotransformer Ta.

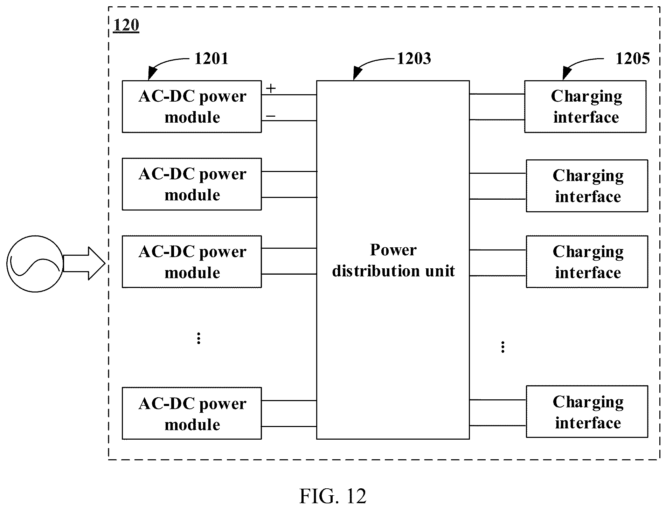

Based on this, an embodiment of this application further provides a charging device. As shown in FIG. 12, the charging device 120 includes at least one AC-DC power module 1201 described above, a power distribution unit 1203, and at least one charging interface 1205. An input end of the AC-DC power module 1201 is configured to receive an alternating current, an output end of the AC-DC power module 1201 is connected to an input end of the power distribution unit 1203, an output end of the power distribution unit 1203 is configured to connect to an input end of the charging interface 1205, and an output end of the charging interface 1205 is configured to output a direct current.

The AC-DC module 1201 is configured to convert the alternating current into a direct current, and the power distribution unit 1203 is configured to distribute the direct current output by the AC-DC power module 1201 to one of the charging interfaces 1205, to charge a to-be-charged device.

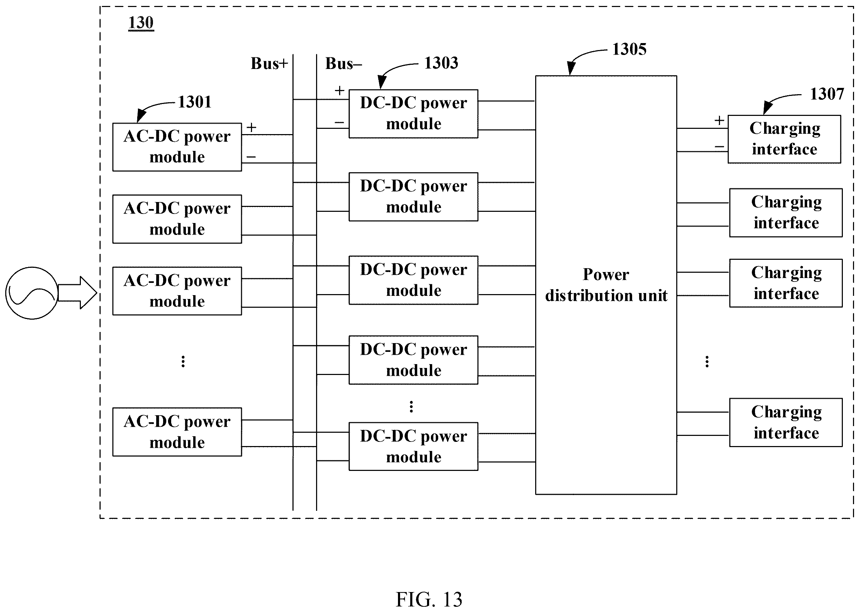

FIG. 13 shows another charging device according to an embodiment of this application. The charging device 130 includes at least one AC-DC power module 1301 described above, at least one DC-DC power module 1303, a power distribution unit 1305, and at least one charging interface 1307. An input end of the AC-DC power module 1301 is configured to receive an alternating current, an output end of the AC-DC power module 1301 is connected to a direct current bus of the charging device, an input end of the DC-DC power module 1303 is connected to the direct current bus of the charging device, an output end of the DC-DC power module 1303 is connected to an input end of the power distribution unit 1305, an output end of the power distribution unit 1305 is connected to an input end of the charging interface 1307, and the output end of the charging interface 1307 is configured to output a direct current.

It should be noted that the AC-DC power module provided in this embodiment of this application may not only be used in the foregoing charging device, but also be used in a device that needs to be rectified, such as a rectifier or a server power supply. This is not limited in this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An AC-DC power module, wherein the AC-DC power module comprises a controller and N groups of interleaved parallel PFC circuits, wherein
each group of the interleaved parallel PFC circuits is configured to convert an alternating current of one phase of an alternating current power supply into a direct current and output the direct current to a direct current bus, wherein 1≤N≤3, and N is an integer;
each group of the interleaved parallel PFC circuits comprises a PFC inductor, an autotransformer, a first rectifier bridge arm, and a second rectifier bridge arm, the autotransformer comprises a first winding and a second winding, one end of the PFC inductor is configured to receive the alternating current, the other end of the PFC inductor is configured to connect to one end of the first winding and one end of the second winding, the other end of the first winding is configured to connect to the first rectifier bridge arm, and the other end of the second winding is configured to connect to the second rectifier bridge arm; and
the controller is configured to:
in response to that an absolute value of a difference between a current of the first winding and a current of the second winding is greater than or equal to a preset value and that an absolute value of the current of the first winding is greater than an absolute value of the current of the second winding, reduce a duty cycle of a drive signal, in a next switching cycle, of a switching transistor that is in the first rectifier bridge arm and whose operating frequency is greater than a frequency of the alternating current; or
in response to that an absolute value of a difference between a current of the first winding and a current of the second winding is greater than or equal to a preset value and that an absolute value of the current of the second winding is greater than an absolute value of the current of the first winding, reduce a duty cycle of a drive signal, in a next switching cycle, of a switching transistor that is in the second rectifier bridge arm and whose operating frequency is greater than a frequency of the alternating current.

2. The power module according to claim 1, wherein the N groups of interleaved parallel PFC circuits comprise bus capacitors, the bus capacitors comprise a positive bus capacitor and a negative bus capacitor that are connected in series, one end of the positive bus capacitor is connected to a positive direct current bus, and the other end of the negative bus capacitor is connected to a negative direct current bus.

3. The power module according to claim 2, wherein the first rectifier bridge arm comprises a first diode, a second diode, a third diode, a fourth diode, a first switching transistor, and a second switching transistor, wherein the first diode, the second diode, the third diode, and the fourth diode are connected in series, a cathode of the first diode is connected to the positive direct current bus, an anode of the fourth diode is connected to the negative direct current bus, one end of the first switching transistor is connected, the other end of the first switching transistor is connected to a midpoint between the bus capacitors, one end of the second switching transistor is connected to a midpoint between the third diode and the fourth diode that are connected in series, and the other end of the second switching transistor is connected to the midpoint between the bus capacitors; and
the second rectifier bridge arm comprises a fifth diode, a sixth diode, a seventh diode, an eighth diode, a third switching transistor, and a fourth switching transistor, wherein the fifth diode, the sixth diode, the seventh diode, and the eighth diode are connected in series, a cathode of the fifth diode is connected to the positive direct current bus, an anode of the eighth diode is connected to the negative direct current bus, one end of the third switching transistor is connected to a midpoint between the fifth diode and the sixth diode that are connected in series, the other end of the third switching transistor is connected to the midpoint between the bus capacitors, one end of the fourth switching transistor is connected to a midpoint between the seventh diode and the eighth diode that are connected in series, and the other end of the fourth switching transistor is connected to the midpoint between the bus capacitors.

4. The power module according to claim 3, wherein the controller is configured to:
in response to that a phase voltage of the alternating current is in a positive half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the first switching transistor in the next switching cycle.

5. The power module according to claim 3, wherein the controller is configured to:
in response to that a phase voltage of the alternating current is in a positive half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the third switching transistor in the next switching cycle.

6. The power module according to claim 3, wherein the controller is configured to:
in response to that a phase voltage of the alternating current is in a negative half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the second switching transistor in the next switching cycle.

7. The power module according to claim 3, wherein the controller is configured to:
in response to that a phase voltage of the alternating current is in a negative half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the fourth switching transistor in the next switching cycle.

8. The power module according to claim 1, wherein the first rectifier bridge arm comprises a first switching transistor and a second switching transistor that are connected in series, one end of the first switching transistor is configured to connect to a positive direct current bus, and one end of the second switching transistor is configured to connect to a negative direct current bus;
the second rectifier bridge arm comprises a third switching transistor and a fourth switching transistor that are connected in series, one end of the third switching transistor is configured to connect to the positive direct current bus, and one end of the fourth switching transistor is configured to connect to the negative direct current bus; and
the other end of the first winding is configured to connect to a midpoint between the first switching transistor and the second switching transistor that are connected in series, and the other end of the second winding is configured to connect to a midpoint between the third switching transistor and the fourth switching transistor that are connected in series.

9. The power module according to claim 8, wherein the controller is configured to:
in response to that a phase voltage of the alternating current is in a positive half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the second switching transistor in the next switching cycle.

10. The power module according to claim 8, wherein the controller is configured to:
in response to that a phase voltage of the alternating current is in a positive half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the fourth switching transistor in the next switching cycle.

11. The power module according to claim 8, wherein the controller is configured to:
in response to that a phase voltage of the alternating current is in a negative half cycle, that the absolute value of the difference between the current of the first winding and the current of the second winding is greater than or equal to the preset value, and that the absolute value of the current of the first winding is greater than the absolute value of the current of the second winding, reduce a duty cycle of a drive signal of the first switching transistor in the next switching cycle.

12. The power module according to claim 8, wherein the controller is configured to:
in response to that a phase voltage of the alternating current is in a negative half cycle, that the absolute value of the difference between the current of the first winding and the current of the second winding is greater than or equal to the preset value, and that the absolute value of the current of the first winding is less than the absolute value of the current of the second winding, reduce a duty cycle of a drive signal of the third switching transistor in the next switching cycle.

13. A charging device, wherein the charging device comprises the AC-DC power module according to any one of claims 1 to 12, at least one DC-DC power module, a power distribution unit, and at least one charging interface, wherein
an input end of the AC-DC power module is configured to receive an alternating current, an output end of the AC-DC power module is connected to a direct current bus of the charging device, an input end of the DC-DC power module is connected to the direct current bus of the charging device, an output end of the DC-DC power module is connected to an input end of the power distribution unit, an output end of the power distribution unit is connected to an input end of the charging interface, and the output end of the charging interface is configured to output a direct current.
